# DEMANDE DE BREVET EUROPEEN

(11) **EP 0 534 831 A1**
(43) Date de publication de la demande: **31.03.1993**
(21) Numéro de dépôt: 92402582.8
(22) Date de dépôt: 21.09.1992
(51) Int. Cl.: B62K 27/02, B62K 27/12

(54) **Side-car transformable adaptable aux bicyclettes**

(30) Priorité: 26.09.1991 FR 9112092
(71) Demandeur: Champenoy, Michel, F-79000 Niort (FR)
(72) Inventeur: Champenoy, Michel, F-79000 Niort (FR)
(74) Mandataire: Vander-Heym, Serge

(57) **Abrégé**

Side-car transformable adaptable aux bicyclettes dont la conception est organisée de telle façon qu'on peut le transformer en remorque.

## Description

La présente invention est relative à un side-car adaptable sur un cycle transformable et démontable susceptible d'étre mis dans un emballage.

Les side-cars traditionnels existants ont un usage strictement utilitaire et sans recherche esthétique particulière.

La présente invention a pour objet de remédier à cet usage unique, et en outre de permettre aux usagers, suivant l'option choisie, de le transformer pour une activité sportive, de plaisance touristique tout en leur permettant un caractère utilitaire par transformation simple. Le side-car est aussi conçu pour étre transformé en remorque pour cycle ou cyclomoteur.

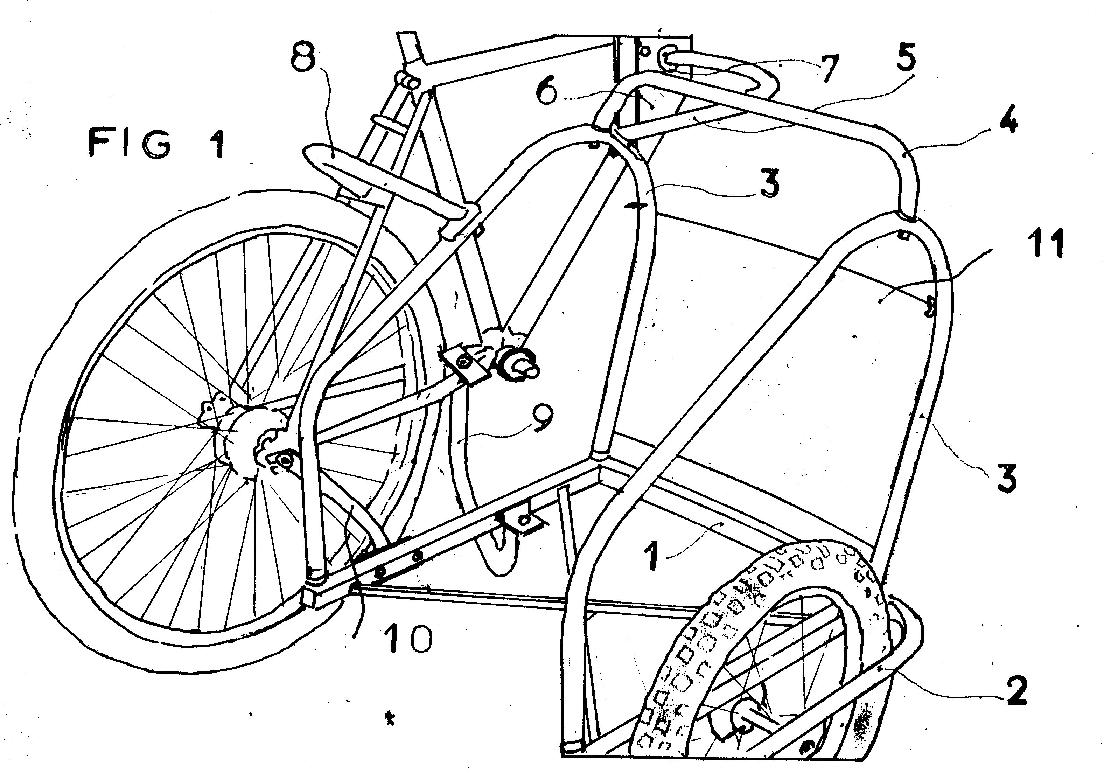

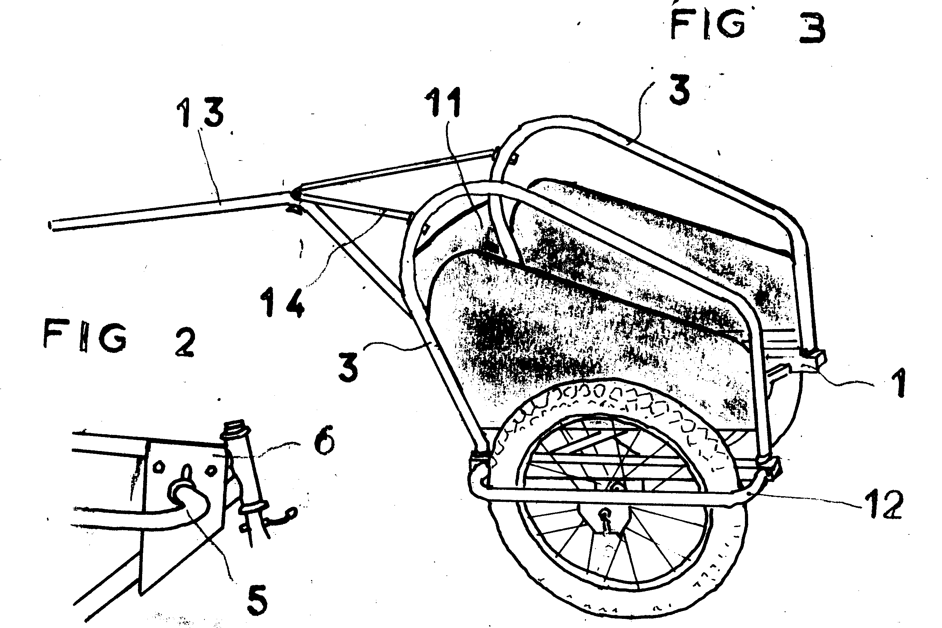

L'invention est illustrée par les figures 1, 2 et 3. Planche 1 et Planche 2.

Cette invention, selon une première caractéristique est constituée d'une plate-forme (1), sur laquelle un support de roue (2), deux protections latérales (3), une protection avant (15), sont soudés, emboités, vissés ou boulonnés pour constituer un ensemble rigide et solide.

Les protections latérales peuvent recevoir une barre démontable (4) dans la partie haute, pour les relier entre elles et servir de maintien au passager dans la version sportive.

Sur la protection latérale, cóté cycle, deux fixations amovibles :
- la première (5) sur le cadre, près du tube de direction du cycle par l'intermédiaire d'une coquille (6) soudée ou boulonnée pour permettre son serrage. Une cale d'épaisseur (7) est éventuellement surajoutée entre la coquille et le tube de fixation pour le règlage du paraléllisme de la roue du side-car.
- la seconde (8) est fixée à la traverse de l'auban de la fourche arrière du cycle.

Sur la plate-forme (1) sont disposées deux autres fixations amovibles :
- la première (9) s'adapte près du pédalier, là où se fixe ordinairement une béquille jusqu'à la plate-forme (1) du side-car, placée de telle façon à respecter une garde au sol et ne pas géner le pied du cycliste.
- la seconde (10) est fixée à l'arrière de la plate-forme par deux vis, reliée à l'axe de la roue arrière du cycle sur la patte du dérailleur.

La protection avant (11) par sa caractéristique d'amovibilité permet de plus, lorsqu'elle est enlevée, d'adapter par exemple sur la plate-forme (1) une carrosserie d'une petite voiture automobile équipée éventuellement d'un pare-brise et d'une capote ou autre accessoire, permettant ainsi la possibilité de transporter un enfant.

La personne conductrice du cycle peut se déplacer avec un regard de contróle facile vers son passager.

Cette transformation esthétique et agréable pour l'enfant est conçue dans un deuxième cas avec l'aménagement d'un coffre pour y placer un panier, un sac ou méme éventuellement l'alimentation d'un moteur auxilliaire de faible puissance pour aider dans les cótes ; ce dernier n'étant appliqué évidemment sur la roue arrière qu'au besoin.

Par ailleurs :
- un frein de stationnement s'adapte sur le cycle et le side-car à l'aide d'un levier de frein à cliquet.

Dans une autre variante :
- il est envisagé un dispositif délimitant l'empattement de l'ensemble en y adaptant : feu avant et arrière ainsi que catadioptes.

Remorque : Pour celle-ci, une deuxième caractéristique s'y ajoute, un autre support de roue (12) se fixe (cóté pilote) à la plate-forme (1) du side-car à l'aide des vis de serrage de la protection latérale Planche 2. Une flèche boulonnée (13) sur l'avant de la plate-forme et une barre en Vé (14) reliée aux deux protections latérales (3) jusqu'à la flèche, constituent une remorque pour cycle ou cyclomoteur.

Les roues de la remorque ou du side-car sont prévues avec des dimensions compatibles et harmonieuses avec celles du cycle.

Dans une variante particulière, il est envisagé sur le cycle deux side-cars symétriques de part et d'autre du vélo.

## Revendications

**1-**Side-car transformable adaptable sur un cycle, comportant une plate-forme (1) et un support de roue (2), caractérisé en ce que la plate-forme (1) présente, du côté situé vers le cycle au moins, une protection latérale (3), des moyens étant prévus sur cette protection latérale et sur la plate-forme pour fixer l'ensemble, de façon amovible, à un cycle.

**2-**Side-car selon la revendication 1, caractérisé en ce qu'il est fixé au cycle selon quatre points de fixation (5, 8, 9 et 10).

**3-**Side-car selon l'une quelconque des revendications 1 et 2, caractérisé en ce que la protection latérale (3) située vers le cycle, est reliée au cadre dudit cycle par des fixations (5 et 8), l'une 5 étant fixée sur la partie haute à l'avant de ladite protection, près du tube de direction par l'entremise d'une coquille (6), et l'autre (8) étant fixée à la partie supérieure de la fourche arrière.

**4-**Side-car selon l'une quelconque des revendications 1 à 3, caractérisé en ce que les protections latérales sont réunies par une protection avant (4) amovible.

**5-**Side-car selon l'une quelconque des revendications 1 à 4, caractérisé en ce qu'il peut être transformé en remorque par l'adjonction d'une flèche (13-14) et d'un support de roue (12).

**6-**Side-car selon l'une quelconque des revendications 1 à 5, caractérisé en ce qu'une cale (7) est éventuellement interposée entre la coquille (6) et la fixation (5) en vue de régler le parallélisme de la roue du side-car.
